# EUROPEAN PATENT APPLICATION

(11) **EP 4 375 519 A1**
(43) Date of publication of application: **29.05.2024**
(21) Application number: 22845636.4
(22) Date of filing: 18.03.2022
(51) Int. Cl.: F16B 21/00, B60C 27/12

(54) **CONNECTION MECHANISM FOR TIRE SLIP PREVENTION DEVICE**

(30) Priority: 21.07.2021 JP 2021120336
(71) Applicant: Car Mate Mfg.co., Ltd., Tokyo 171-0051 (JP)
(72) Inventor: TANABE, Shigeru, Tokyo 171-0051 (JP)
(74) Representative: Lambacher, Michael
(86) International application number: PCT/JP2022/012533
(87) International publication number: WO 2023/002696

(57) **Abstract**

To provide a connection structure for a tire anti-slip device capable of easily fixing a coupling member to a wire end without increasing the number of parts,
[Solving means] a connection structure (10) includes a coupling member (20) having a fixed-side opening (22) and a detachable-side opening (30), wherein a wire (12a) arranged in the fixed-side opening (22) has a head (12b), the fixed-side opening (22) has a head insertion portion (24), a head holding portion (26), and a wire insertion portion (28), a side wall of the head insertion portion (24) has a first protrusion (24a) for pushing the head (12b) toward a specific side wall side, and the head holding portion (26) has a second protrusion (26a) for pushing the head (12b) toward the side wall side where the first protrusion (24a) is arranged.

## Description

### TECHNICAL FIELD

The present invention relates to a tire anti-slip device, and more particularly, to a structure for connecting ends of a wire provided in the tire anti-slip device.

### BACKGROUND ART

As a connection structure provided in a fastening means of a tire anti-slip device, a technique disclosed in Patent Literature 1 is known in the art. The connection structure disclosed in Patent Literature 1 has a basic configuration in which male members are arranged at both ends of a steel wire and a pair of male members are engaged with a female member (coupling member). Here, the male member has a body, a neck, and a head. The body is an element caulked to the end of the wire, and the neck is a cylindrical part provided at the tip side of the body and formed to have a diameter smaller than that of the body. In addition, the head is a hemispherical portion provided at the tip side of the neck and formed to have a diameter larger than that of the body.

The female member is basically a cylindrical member having an internal space capable of housing the head, and openings having a narrow portion for preventing the head from falling off are provided at both longitudinal ends. In addition, a slit that is slightly wider than the diameter of the neck is formed along the longitudinal direction of this cylinder, and an opening into which the head can be inserted is provided at the center of the longitudinal direction.

In the connection mechanism having such a configuration, both sides of the male member paired with the female member are detachably installed to the female member. For this reason, when no tension is applied to the wire, the female member is likely to fall off, and there is also a risk of loss. Meanwhile, it is also stated that a cap that can be engaged with the female member is provided to maintain the engaged state of the male member. However, in this case, the number of parts would increase.

### [Citation List]

### [Patent Literatures]

Patent Literature 1: Japanese Unexamined Utility Model Application Publication No. S58-153103

### SUMMARY OF INVENTION

### Problems to be Solved by Invention

It is an object of the embodiments of the present invention to provide a connection structure for a tire anti-slip device capable of easily fixing a coupling member to a wire end without increasing the number of parts.

### Means for Solving the Problems

In order to achieve the aforementioned object, according to the present invention, there is provided a connection structure for a tire anti-slip device, including a coupling member having a fixed-side opening where an end of a wire is fixedly held and a detachable-side opening where an end of the wire is detachably held, wherein a tip of the wire arranged in the fixed-side opening has a head configured as a columnar member having a diameter larger than a diameter of the wire, the fixed-side opening has a head insertion portion for inserting the head, a head holding portion for holding the head, and a wire insertion portion formed to have a diameter smaller than a diameter of the head to allow insertion of only the wire, and a side wall of the head insertion portion has a first protrusion for pushing the head toward a specific side wall side.

In the connection structure for the tire anti-slip device having the characteristics described above, it is preferable that the head holding portion has a second protrusion for pushing the head toward the side wall side where the first protrusion is arranged. As a result, the head housed in the head holding portion is forcedly pushed toward the center side of the head holding portion.

In the connection structure for the tire anti-slip device having the characteristics described above, it is preferable that the head has a flat tip, and the first protrusion has an inclined surface provided in the opening side and an opposing surface provided in the head holding portion side in parallel to a bottom surface of the head holding portion. As a result, the inclined surface serves as a guide when the head moves from the head insertion portion side to the head holding portion side, so as to facilitate the movement. Meanwhile, when the head is moved from the head holding portion side to the head insertion portion side, the tip of the head makes contact with the opposing surface so as to hinder movement, and it is possible to facilitate prevention of falling-off.

In the connection structure for the tire anti-slip device having the characteristics described above, the wire insertion portion may have a bent portion, and the head insertion portion and the head holding portion may be arranged in a position deviated from an extension line of the detachable-side opening. As a result, it is possible to shorten the length of the coupling member. This makes it possible to reduce a distance between the ends of the tire anti-slip device that covers the tire tread surface. Therefore, it is possible to improve performance of the anti-slip device and a ride comfort of a vehicle.

In the connection structure for the tire anti-slip device having the characteristics described above, the first protrusion may be provided to block a part of the insertion passage between the opening of the head insertion portion and the head while the head is positioned at a center of the head holding portion. As a result, it is possible to reliably prevent the head from falling off from the fixed-side wire end.

### Advantageous Effects

Using the connection structure for the tire anti-slip device having the characteristics described above, it is possible to easily fix the coupling member to the wire end without increasing the number of parts such as the coupling member.

### BRIEF DESCRIPTION OF DRAWINGS

FIG. 1 is a perspective view illustrating a connection structure for a tire anti-slip device according to a first embodiment.
FIG. 2 is a cross-sectional view illustrating the connection structure for the tire anti-slip device according to the first embodiment.
FIG. 3 is an exploded cross-sectional view illustrating configurations of a coupling member, a fixed-side wire end, and a detachable-side wire end.
FIG. 4 is a cross-sectional view illustrating a state in which the fixed-side wire end is inserted into the fixed-side opening of the coupling member.
FIG. 5 is a cross-sectional view illustrating a state in which the head of the fixed-side wire end inserted into the fixed-side opening of the coupling member is pulled into the head insertion portion.
FIG. 6 is a cross-sectional view illustrating a state in which the head of the fixed-side wire end is pulled into the head holding portion from the head insertion portion.
FIG. 7 is a cross-sectional view illustrating a state in which the head of the fixed-side wire end that has been pulled into the head holding portion is pushed back by the action of a second protrusion.
FIG. 8 is a cross-sectional view illustrating a state in which the head of the fixed-side wire end is housed in the head holding portion of the fixed-side opening.
FIG. 9 is diagram showing the fixed-side opening as seen from the arrow direction A in FIG. 3.
FIG. 10 is a perspective view illustrating a role of the connection structure in the tire anti-slip device.
FIG. 11 is a perspective view illustrating a connection structure for a tire anti-slip device according to a second embodiment.
FIG. 12 is a cross-sectional view illustrating the connection structure for the tire anti-slip device according to the second embodiment.

### MODES FOR EMBODYING INVENTION

A connection structure for a tire anti-slip device according to embodiments of the present invention will now be described in detail with reference to the accompanying drawings. Note that the embodiments described below are merely intended to envisage some of the preferred embodiments for carrying out the present invention, and they can be considered as a part of the invention as long as the effects are achieved even when some of the configurations are changed.

### [Configuration]

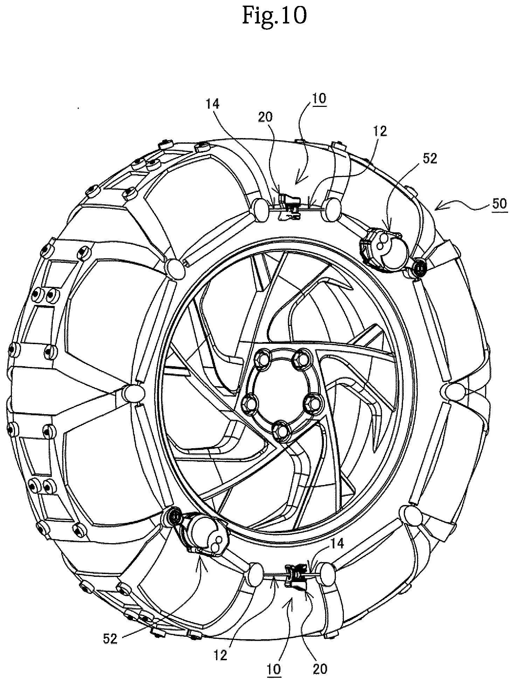

The connection structure for the tire anti-slip device according to this embodiment (hereinafter, simply referred to as a connection structure 10) is for connecting a wire of a fastening means 52 in a tire anti-slip device 50, as shown in FIG. 10. Specifically, the connection structure basically includes an end of the wire located in the fixed side (hereinafter referred to as a fixed-side wire end 12), an end of the wire located on the detachable side (hereinafter, referred to as a detachable-side wire end 14), and a coupling member 20.

### [First Embodiment]

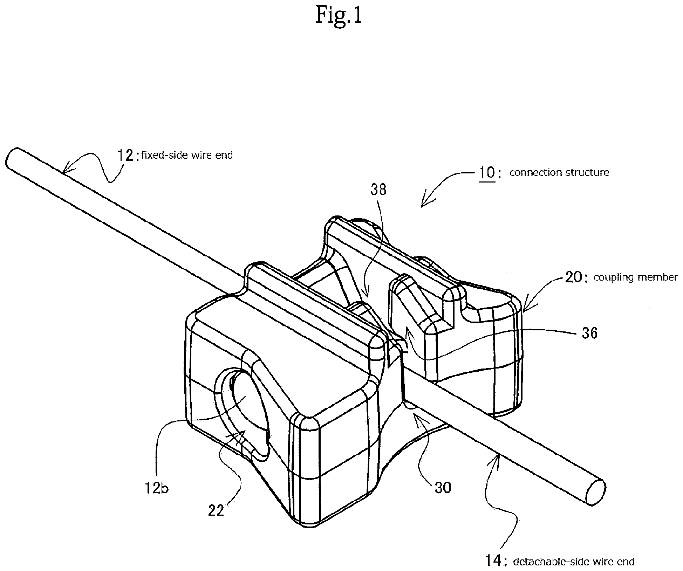

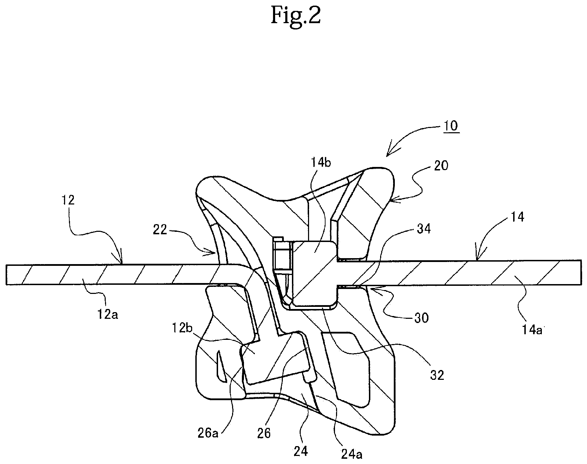

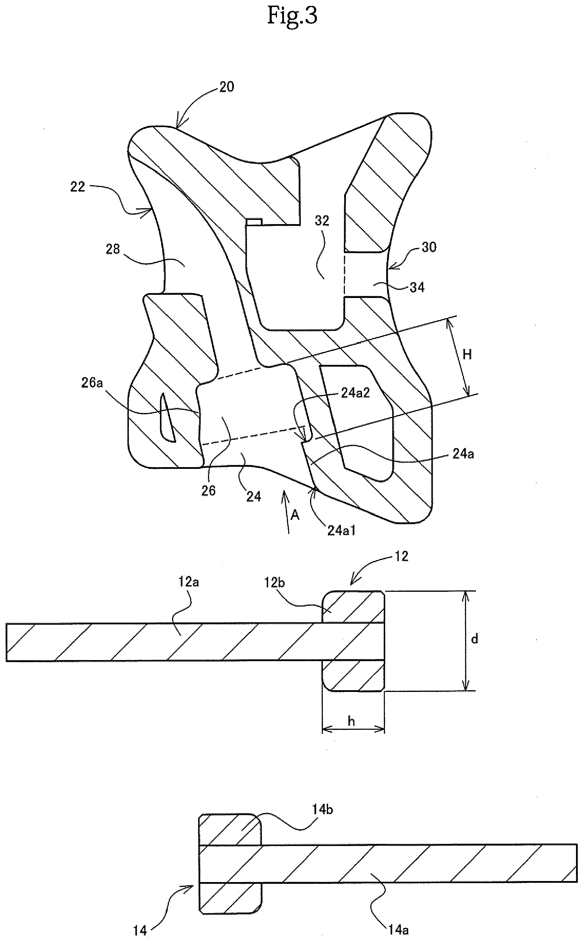

First, a connection structure according to a first embodiment will be described in detail with reference to FIGS. 1 to 3. In the connection structure 10 according to this embodiment, heads 12b and 14b having diameters larger than those of wires 12a and 14a are provided at respective tips of the fixed-side wire end 12 and the detachable-side wire end 14. The heads 12b and 14b are columnar members made of, for example, metal or the like and may be installed to the tips of the wires 12a and 14a by caulking or the like. Although the shapes of the heads 12b and 14b are not strictly limited, it is preferable that at least the outer periphery of the tip has a surface facing an opposing surface 24a2 of a first protrusion 24a, which will be described in detail later. In the example of FIGS. 2 and 3, the tips are flat.

The coupling member 20 has a fixed-side opening 22 for holding the fixed-side wire end 12 and a detachable-side opening 30 for holding the detachable-side wire end 14. Here, the wire protrusion-side opening (the opening of a wire insertion portion 28) of a fixed-side opening 22 and the wire protrusion-side opening (the opening of a wire insertion portion 34) of the detachable-side opening 30 are arranged on the opposite sides of the coupling member 20.

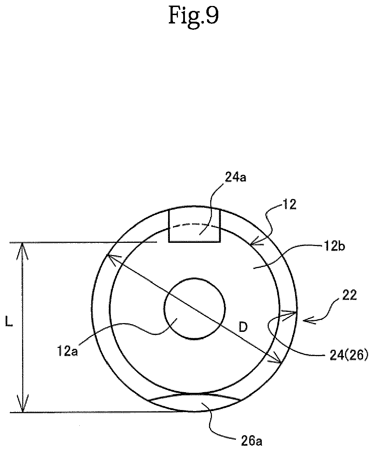

The fixed-side opening 22 has a head insertion portion 24, a head holding portion 26, and a wire insertion portion 28. The head insertion portion 24 is located at one opening end of the fixed-side opening 22, and is a hole through which the head 12b is inserted from the opening side toward the head holding portion 26 side. As seen from the arrow direction of the opening side (as seen from the arrow direction A), the head insertion portion 24 has a circular shape and is configured to be slightly larger than the diameter of the head 12b (see FIG. 9) .

A side wall of the head insertion portion 24 is provided with the first protrusion 24a. The first protrusion 24a is an element for pushing the head 12b toward a specific side wall side (in the case of this embodiment, the side wall facing the side wall where the first protrusion 24a is arranged) when the head 12b passes through the head insertion portion 24. According to this embodiment, the first protrusion 24a has an inclined surface 24a1 on the opening side and the opposing surface 24a2 on the head holding portion 26 side. The inclined surface 24a1 is configured such that the amount of protrusion toward the center of the head insertion portion 24 increases from the opening side to the head holding portion 26 side. In addition, the opposing surface 24a2 is formed parallel to the bottom surface of the head holding portion 26, which will be described in detail later.

The diameter D of the head insertion portion 24 having such a configuration (see FIG. 9) is larger than the diameter d of the head 12b at the fixed-side wire end 12 by at least the height of the first protrusion 24a. In addition, according to this embodiment, the distance L between the tip of the first protrusion 24a and the side wall facing the side wall where the first protrusion 24a is arranged (see FIG. 9) is configured to be equal to or slightly larger than the diameter d of the head 12b.

The head holding portion 26 is an element that holds the head 12b inserted from the opening side of the head insertion portion 24 and prevents the fixed-side wire end 12 from falling off from the wire insertion portion 28 side. The head holding portion 26 is an opening located on an extension line of the head insertion portion 24, and its diameter may be equal to the diameter D of the head insertion portion 24. In addition, a second protrusion 26a is provided on the side wall of the head holding portion 26. The second protrusion 26a is provided on a side wall opposite to the side wall where the first protrusion 24a is arranged. By providing the second protrusion 26a, the head 12b pushed toward one side wall side (side wall side opposite to the side wall where the first protrusion 24a is arranged) when passing through the head insertion portion 24 is pushed back toward the center of the head holding portion 26. Note that the height H from the bottom surface of the head holding portion 26 to the opposing surface 24a2 of the first protrusion 24a is slightly higher than the height h of the head 12b.

The wire insertion portion 28 is an element for inserting the wire 12a of the fixed-side wire end 12. According to this embodiment, the wire insertion portion 28 has a bent portion, and the head insertion portion 24 and the head holding portion 26 are provided at a position deviated from the extension line of the detachable-side opening 30, which will be described in detail later. In this configuration, the distance between the wire protrusion-side opening (opening of the wire insertion portion 28) of the fixed-side opening 22 and the wire protrusion-side opening (opening of the wire insertion portion 34) of the detachable-side opening 30 can be shortened. As a result, the length of the coupling member 20 can be reduced. By reducing the length of the coupling member 20, it is possible to reduce the distance between the ends of the tire anti-slip device 50 that covers the tire tread surface. Therefore, it is possible to improve performance as an anti-slip device and a ride comfort of a vehicle.

The detachable-side opening 30 is an element for inserting and holing the detachable-side wire end 14. Specifically, the detachable-side opening 30 includes a head holding portion 32 for holding the head 14b, a wire insertion portion 34 for inserting a wire 14a, and a slit 36 continuous with the head holding portion 32 and the wire insertion portion 34. The head holding portion 32 may include a bottom surface that receives the head 14b provided on the detachable-side wire end 14, and a side wall or a protrusion that covers at least a part of the outer periphery of the head 14b.

The wire insertion portion 34 may be a hole having a diameter smaller than that of the head 14b and larger than that of the wire 14a. The slit 36 may be a groove having a width smaller than the diameter of the head 14b and larger than the diameter of the wire 14a. Furthermore, an opening 38 is provided in the tip side of the head holding portion 32 on the extension line of the slit 36, and the opening 38 has a width that allows the head 14b to be inserted therethrough.

### [Actions]

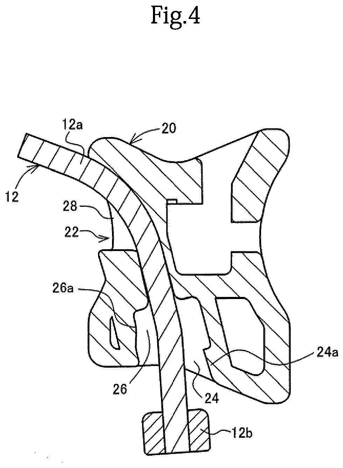

Next, engagement of the wire with the coupling member 20 (in the fixed-side wire end 12 and the detachable-side wire end 14) of the connection structure having the aforementioned configuration will be described. First, a case where the fixed-side wire end 12 is engaged with the fixed-side opening 22 of the coupling member 20 will be described with reference to FIGS. 4 to 8. When the fixed-side wire end 12 is not provided with the head 12b, the end of the wire 12a is inserted from the wire insertion portion 28, and the tip thereof is extracted from the head insertion portion 24. In this state, the head 12b is caulked to the end of the wire 12a to form the fixed-side wire end 12 as shown in FIG. 4. In addition, when the head 12b is already provided at the end of the wire 12a, the rear end side of the wire 12a may be inserted from the head insertion portion 24 side toward the wire insertion portion 28.

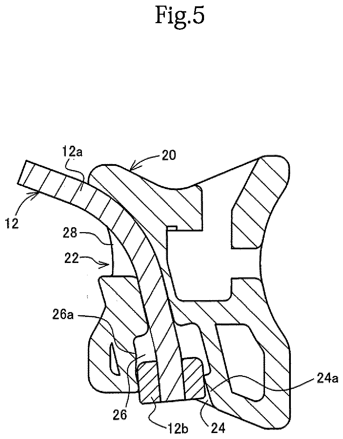

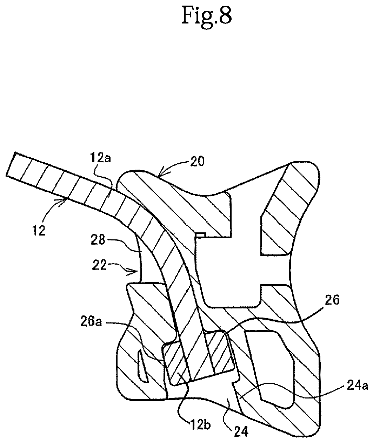

By drawing the wire 12a of the fixed-side wire end 12 in the state shown in FIG. 4 from the wire insertion portion 28 side to the pulling direction, the head 12b provided at the end of the wire 12a passes through the head insertion portion 24 and is held by the head holding portion 26 as shown in FIG. 8. Here, when the head 12b passes through the head insertion portion 24, the head 12b is forcedly pushed toward the side wall opposite to the side wall where the first protrusion 24a is provided due to the action of the first protrusion 24a (see FIG. 5).

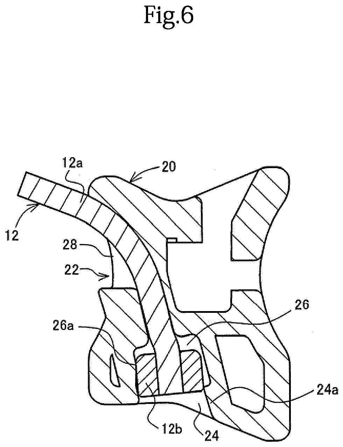

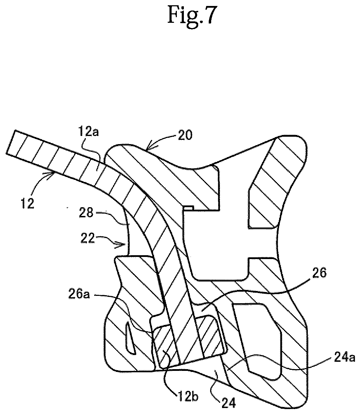

In this state, the head 12b passing through the head insertion portion 24 and reaching the head holding portion 26 is slightly tilted, so that the head 12b can pass between the first protrusion 24a and the second protrusion 26a as shown in FIG. 6. In addition, the head 12b that has reached the head holding portion 26 is pushed back toward the center of the head holding portion 26 by the action of the second protrusion 26a as shown in FIG. 7. The distance L between the first protrusion 24a and the side wall is equal to or slightly larger than the diameter d of the head. For this reason, as the head 12b held by the head holding portion 26 is seen from the opening side of the fixed-side opening 22, the first protrusion 24a is caught by a part of the head 12b as shown in FIG. 9, that is, the first protrusion 24a blocks a part of the insertion passage between the opening of the head insertion portion 24 and the head 12b.

In addition, the height H from the bottom surface of the head holding portion 26 to the opposing surface 24a2 of the first protrusion 24a is slightly higher than the height h of the head 12b. Since the center position is determined by the wire 12a, free movement of the head 12b housed in the head holding portion 26 is restricted as shown in FIG. 8. For this reason, even when the tension of the wire 12a is weakened, and a force is applied to push out the head 12b toward the head insertion portion 24 side, the tip of the head 12b makes contact with the opposing surface 24a2 of the first protrusion 24a, and is not pushed out toward the head insertion portion 24 side.

Next, a case where the detachable-side wire end 14 is engaged with the detachable-side opening 30 will be described. To engage the detachable-side wire end 14, the head 14b provided at the end of the wire 14a is inserted from the opening 38, and the wire 14a is extracted through the slit 36, and is then guided to the wire insertion portion 34. Then, by applying force to pull the wire 14a extending from the wire insertion portion 34, the head 14b fits into the head holding portion 32, and the engagement is completed.

### [Effects]

In the connection structure 10 having the aforementioned characteristics, both the fixed-side wire end 12 and the detachable-side wire end 14 merely need to have the heads 12b and 14b that can be fixed by caulking or the like. In order to fix the fixed-side wire end 12 to the fixed-side opening 22, the fixing is completed by simply drawing the wire 12a extracted from the wire insertion portion 28. For this reason, it is possible to easily fix the coupling member 20 to the end of the wire 12a without increasing the number of parts.

### [Second Embodiment]

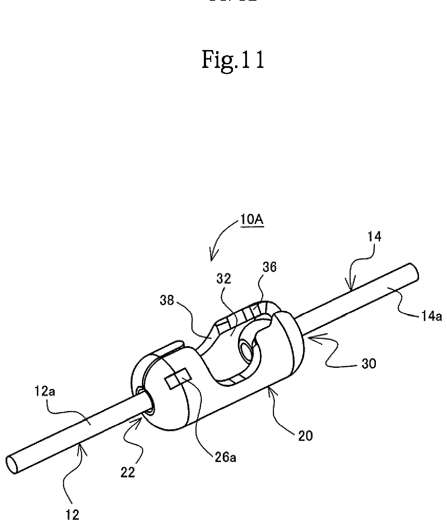

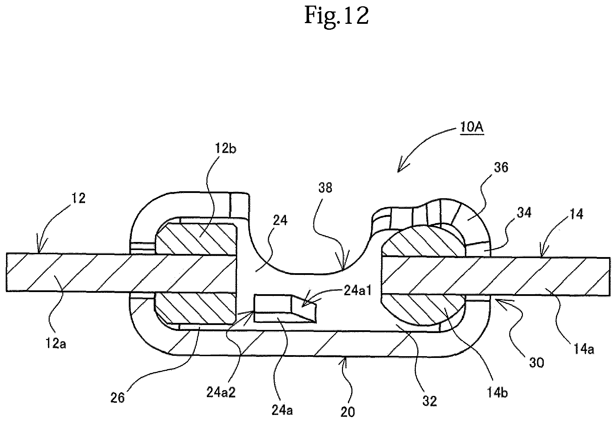

Next, a connection structure for a tire anti-slip device according to a second embodiment will be described with reference to FIGS. 11 and 12. Note that a basic configuration of a connection structure 10A according to this embodiment is also similar to that of the connection structure 10 of the first embodiment. Therefore, like reference numerals denote like parts having similar functions in the drawings, and detailed description thereof will not be repeated.

The difference between the connection structure 10A of the second embodiment and the connection structure 10 of the first embodiment lies in the configuration of the coupling member 20. Specifically, the coupling member 20 of the connection structure 10 of the first embodiment has a so-called billet structure in which the fixed-side opening 22 and the detachable-side opening 30 are provided in a lump of resin, metal, or the like. Meanwhile, the coupling member 20 according to the second embodiment has a cylindrical member (including a roll-shaped member).

Specifically, a fixed-side opening 22 and a detachable-side opening 30 are provided at both ends of the coupling member 20 formed in a cylindrical shape, and an opening 38 for inserting the heads 12b and 14b provided at the ends of the wires 12a and 14a is provided on a side wall formed therebetween, so that the opening 38 is shared.

The basic structures of the fixed-side opening 22 and the detachable-side opening 30 are similar to those of the coupling member 20 of the first embodiment. That is, the fixed-side opening 22 includes a head insertion portion 24 having a first protrusion 24a, a head holding portion 26 having a second protrusion 26a, and a wire insertion portion 28. In addition, the detachable-side opening 30 includes a head holding portion 32, a wire insertion portion 34, and a slit 36 that straddles both the portions 32 and 34.

### [Effects]

Even with the connection structure 10A having such a configuration, it is possible to easily fix the coupling member 20 to the end of the wire 12a without increasing the number of parts, as in the first embodiment. Furthermore, it is possible to provide a simpler configuration of the coupling member 20, compared to the first embodiment. Therefore, it is also possible to reduce the manufacturing cost.

### [Modifications]

In the embodiments described above, the head insertion portion 24 and the head holding portion 26 in the fixed-side opening 22 have the first protrusion 24a and the second protrusion 26a, respectively. However, the second protrusion 26a has a role of pushing back the head 12b, which has been pushed toward the side wall side by the first protrusion 24a, toward the center of the head holding portion 26. In addition, due to this action, the head 12b is housed in a position overlapping with the first protrusion 24a as seen from the arrow direction of the opening side (as seen from the arrow direction A in FIG. 3), so that it is possible to prevent the head 12b from falling off from the fixed-side opening 22.

However, by increasing the diameter of the head insertion portion 24 or a part of the passage through which the head 12b passes in the head insertion portion 24, and increasing the projecting allowance of the first protrusion, the head 12b housed in the head holding portion 26 returns to the center side of the head holding portion 26 by the reaction force of the wire 12a, and comes to a position overlapping with the first protrusion 24a as seen in the arrow direction of the opening side. In such a configuration, it is not necessary to provide the second protrusion 26a on the head holding portion 26. This is because the aforementioned effects can be achieved even with such a configuration.

### Reference Signs List

10,10A connection structure,
12 fixed-side wire end,
12a wire,
12b head,
14 detachable-side wire end,
14a wire,
14b head,
20 coupling member,
22 fixed-side opening,
24 head insertion portion,
24a first protrusion,
24a1inclined surface,
24a2opposing surface,
26 head holding portion,
26a second protrusion,
28 wire insertion portion,
30 detachable-side opening,
32 head holding portion,
34 wire insertion portion,
36 slit,
38 opening,
50 tire anti-slip device,
52 fastening means.

## Claims

1. A connection structure for a tire anti-slip device, comprising
a coupling member having a fixed-side opening where an end of a wire is fixedly held and a detachable-side opening where an end of the wire is detachably held,
wherein a tip of the wire arranged in the fixed-side opening has a head configured as a columnar member having a diameter larger than a diameter of the wire,
the fixed-side opening has a head insertion portion for inserting the head, a head holding portion for holding the head, and a wire insertion portion formed to have a diameter smaller than a diameter of the head to allow insertion of only the wire, and
a side wall of the head insertion portion has a first protrusion for pushing the head toward a specific side wall side.

2. The connection structure for the tire anti-slip device according to claim 1, wherein the head holding portion has a second protrusion for pushing the head toward the side wall side where the first protrusion is arranged.

3. The connection structure for the tire anti-slip device according to claim 1 or 2, wherein
the head has a flat tip, and
the first protrusion has an inclined surface provided in the opening side and an opposing surface provided in the head holding portion side in parallel to a bottom surface of the head holding portion.

4. The connection structure for the tire anti-slip device according to any one of claims 1 to 3, wherein
the wire insertion portion has a bent portion, and
the head insertion portion and the head holding portion are arranged in a position deviated from an extension line of the detachable-side opening.

5. The connection structure for the tire anti-slip device according to any one of claims 1 to 4, wherein
the first protrusion is configured to block a part of an insertion passage between the opening of the head insertion portion and the head while the head is positioned at a center of the head holding portion.
